# FASCICULE DE BREVET EUROPEEN

(11) **EP 1 130 295 B1**
(45) Date de publication et mention de la délivrance du brevet: **24.05.2006**
(21) Numéro de dépôt: 01440032.9
(22) Date de dépôt: 15.02.2001
(51) Int. Cl.: F16K 1/22, F16K 27/02

(54) **Dispositif de vanne à clapet et ensemble de régulation comportant de tels dispositifs**
Klappenventil und Steuervorrichtung mit einem derartigen Ventil
Butterfly valve and control assembly with such a valve

(30) Priorité: 01.03.2000 FR 0002644
(43) Date de publication de la demande: 05.09.2001
(73) Titulaire: Mark IV Systemes Moteurs (Société Anonyme), 92400 Courbevoie (FR)
(72) Inventeur: Alves, Anthony, 68320 Holtzwihr (FR); Komurian, Richard, 68230 Turckheim (FR)
(74) Mandataire: Franzolin, Luigi

(56) Documents cités:
- EP-A- 0 947 681
- US-A- 3 568 975
- US-A- 4 273 308
- US-A- 4 771 740
- US-A- 5 615 861
- US-A- 5 673 895
- US-A- 5 715 782
- PATENT ABSTRACTS OF JAPAN vol. 015, no. 138 (M-1100), 8 avril 1991 (1991-04-08) & JP 03 018632 A (NIPPON CARBURETER CO LTD), 28 janvier 1991 (1991-01-28)

## Description

La présente invention concerne le domaine de la régulation de l'écoulement de fluides, gazeux ou liquides, dans des conduits, tuyaux, tubes ou analogues, et a pour objet un ensemble de régulation comportant un dispositif de vanne à clapet.

La présente invention vise essentiellement à proposer un ensemble pour contrôler un flux dans un conduit ou analogue, de structure simple et facile à réaliser, éventuellement aisé à mettre en place, permettant d'obtenir une bonne étanchéité à l'état fermé et nécessitant un effort limité pour sa manoeuvre.

En outre, ledit ensemble devra présenter une structure robuste permettant de résister notamment aux vibrations et autorisant une implantation dans un environnement volontaire agressif, par exemple sous le capot d'un véhicule automobile.

US-A-5 673 895 montre un ensemble de régulation selon les caractéristiques du préambule de la revendication 1, comportant deux portions de conduit désaxées l'une par rapport à l'autre et formants deux surfaces de appui ou parties de siège opposés, et un corps de clapet présentant bords destinées a venir en appui frontalement avec les parties de siège correspondantes.

JP-A-03018632 montre un ensemble de régulation comportant une portion de conduit intermédiaire à surface interne cylindrique continue, et un corps de clapet présentant bords biseautés destinées a coopérer avec ladite surface cylindrique.

La présente invention a pour but de proposer une ensemble de régulation qui permet de garantir une bonne étanchéité a l'état fermé du clapet, une faible usure des zones en contact, et une faible perturbation de l'écoulement à l'état ouvert.

A cet effet, la présente invention a pour objet un ensemble de régulation selon la revendication 1.

L'invention sera mieux comprisse grâce à la description ci-après, qui se rapporte à des modes de réalisation préférés, donnés à titre d'exemples non limitatifs, et expliqués avec référence aux dessins annexés dans lesquels :
la figure 1 est une représentation schématique en élévation latérale et en coupe d'un dispositif à vanne à clapet selon un premier mode de réalisation de l'invention ;
la figure 2 est une vue en perspective d'un dispositif à vanne à clapet selon un second mode de réalisation de l'invention ;
la figure 3 est une vue en élévation frontale d'un dispositif à vanne à clapet similaire à celui représenté sur la figure 2 ;
la figure 4 est une vue en coupe selon A-A du dispositif représenté sur la figure 3, et,
la figure 5 est une vue en coupe selon B-B du dispositif représenté sur la figure 4.

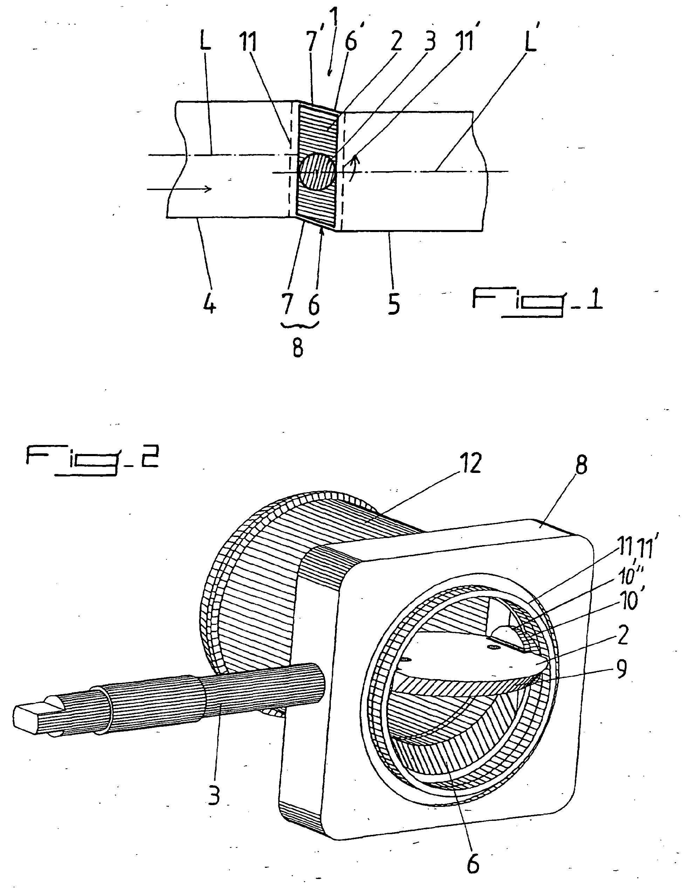

La figure 1 des dessins annexés représente de manière schématique un mode de réalisation d'un dispositif 1 de vanne à clapet pivotant, à corps de clapet 2 sensiblement en forme de disque monté sur un axe support et de commande 3, pour la régulation de la circulation d'un fluide, notamment liquide, entre une portion de conduit amont 4 et une portion de conduit aval 5.

- Conformément à l'invention, le corps de clapet 2 est monté de manière centrée sur l'axe 3, les deux portions de conduit 4 et 5 sont désaxées l'une par rapport à l'autre et les surfaces internes 7, 7' des décrochements opposés résultant dudit décalage axial ou non-alignement des portions 4 et 5, constituent les surfaces d'appui 7, 7' de deux parties de siège complémentaires 6, 6' pour le corps de clapet 2, situées de part et d'autre de l'axe 3 portant ledit corps de clapet 2.

Compte tenu de la nature du décalage mutuel des deux portions de conduit 4 et 5, les décrochements opposés 6 présenteront une largeur ou profondeur maximale au droit du plan contenant les deux axes longitudinaux L et L' et, théoriquement, dans le cas de décrochements à angle droit, une largeur nulle au centre de l'axe support et de commande 3.

Dans ces conditions, les surfaces d'appui 7 et 7' des deux parties de siège complémentaires 6 et 6' constituent, respectivement vues en direction amont pour l'une et en direction aval pour l'autre, au moins des parties de croissants de lune opposés, symétriques par rapport à l'axe 3 portant le corps de clapet 2 et dont les extrémités sont dirigées vers ledit axe 3.

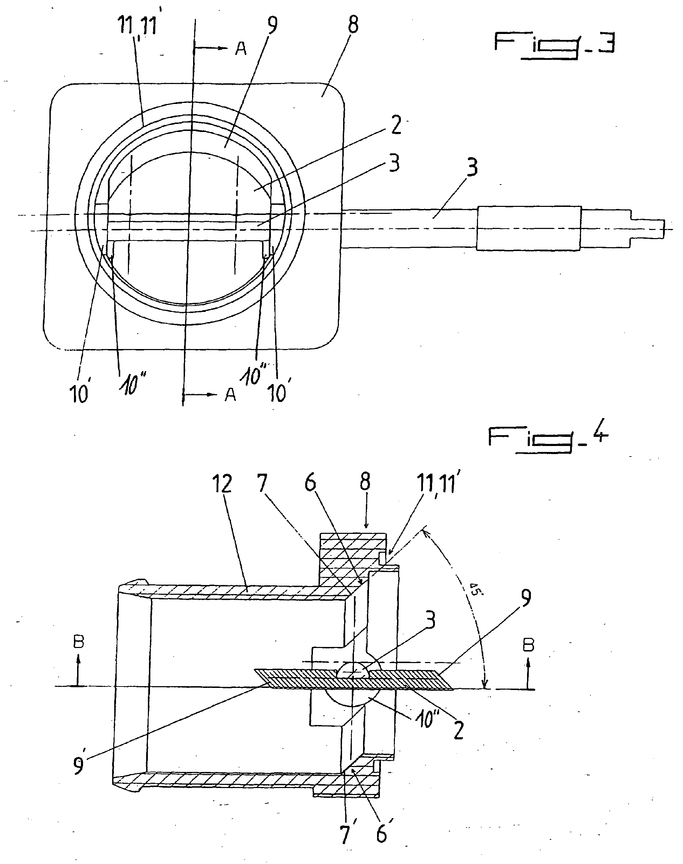

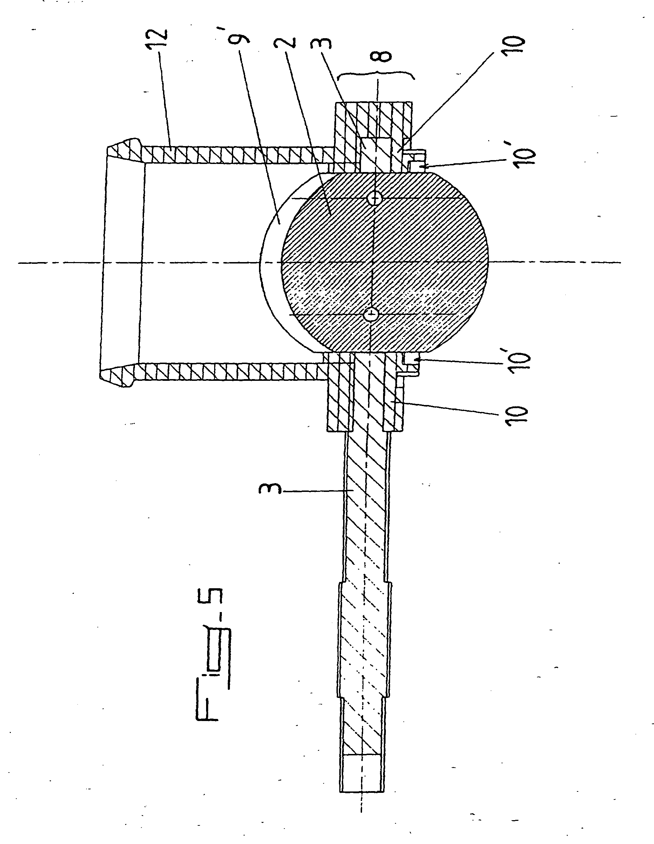

Selon une variante de réalisation préférée de l'invention, représentée notamment aux figures 1, 2 et 4 des dessins annexés, les deux parties de siège complémentaires 6 et 6' présentent des surfaces internes et d'appui 7, 7' inclinées par rapport à un plan perpendiculaire aux axes longitudinaux L et L' des deux portions de conduit 4 et 5 pour constituer une portion de passage 8 d'épaisseur non nulle reliant lesdites deux portions de conduit 4 et 5 et dont la surface interne assure la continuité et réalise la liaison entre les surfaces internes des deux portions de conduit 4 et 5 précitées, au moins au niveau des surfaces d'appui 7 et 7' des deux parties de siège complémentaires 6 et 6'.

En outre, pour réaliser une fermeture du dispositif 1 de vanne à clapet avec une obturation efficiente du passage, le corps de clapet 2 présente des bords biseautés 9 et 9', avec des pentes opposées de part et d'autre de l'axe support et de commande 3 et avec des angles au sommet des biseaux qui diminuent en s'éloignant dudit axe 3, en partant avec des bords pratiquement perpendiculaires à proximité dudit axe 3, lesdits bords biseautés 9, 9' étant destinés à venir en appui avec coopération de forme et contact intime sur les surfaces internes 7 et 7' des parties de siège respectives 6 et 6' correspondantes.

Conformément à une autre caractéristique de l'invention, non représentée aux dessins annexés, les bords biseautés 9 et 9', et en particulier les surfaces des bords biseautés venant en appui sur les surfaces 7 et 7' des parties de siège 6 et 6', sont revêtus d'une garniture ou d'une couche d'étanchéité.

Toutefois, il ne sera pas nécessaire de disposer de telles garnitures ou couches supplémentaires lorsque l'on ne recherche pas une étanchéité de bonne qualité (présence de fuites à la fermeture), étant noté que le contact surfacique bords biseautés 9, 9', surfaces d'appui 7, 7' des portées de siège 6, 6', associé aux chicanes résultant des décrochements, entraîne déjà une bonne étanchéité, même sans disposition spécifique.

Pour réduire les problèmes d'étanchéité au niveau des zones de contact entre les parties de siège 6 et 6' et les ouvertures débouchantes internes des paliers opposés 10 de montage et de guidage de l'axe support et de commande 3, le dispositif 1 peut comporter, au moins au niveau de la portion de passage 8, des projections 10' des paliers 10 de l'axe support et de commande 3, protubérantes dans ladite portion de passage 8, délimitant latéralement à ce niveau la section de passage par deux cordes parallèles perpendiculaires à l'axe 3 et réduisant de ce fait les surfaces d'appui 7, 7' des parties de siège complémentaires 6, 6' (voir figures 2, 3 et 5), des flasques d'étanchéité 10" en forme de demi-disques étant rapportés ou formés sur le corps de clapet 2 et venant en application intime contre les faces des bords internes desdites projections 10'.

Les flasques 10" couvriront ainsi, de manière étanche, et préférentiellement du côté amont, les projections 10', ces dernières présentant avantageusement également un contour extérieur circulaire autorisant leur recouvrement par les flasques 10" dudit corps de clapet 2 sans faire obstacle à la rotation ou au pivotement de ce dernier. Les flasques 10" consisteront avantageusement en un matériau résilient d'étanchéification, tel que par exemple du caoutchouc, et pourront éventuellement être formés en continu avec les garnitures d'étanchéité des bords biseautés 9, 9' du corps de clapet 2. On obtient ainsi tant une étanchéité continue dans le sens de l'écoulement, qu'une étanchéité radiale au niveau des paliers 10.

Conformément à un mode de réalisation avantageux de l'invention, dont une variante est représentée sur la figure 1 des dessins annexés, la portion de passage 8 peut être réalisée sous la forme d'un insert ou d'un élément intermédiaire dans lequel est prémonté l'axe support et de commande 3 avec le corps de clapet 2, ledit insert ou élément intermédiaire étant pourvu d'interfaces 11, 11' de branchement et de raccordement pour une liaison étanche avec les portions de conduit amont 4 et aval 5.

En variante, ladite portion de passage 8 peut également constituer un insert mis en place, avant assemblage des deux portions de conduit 4 et 5 l'une avec l'autre, dans un renfoncement ou une rainure ménagée dans l'une des deux portions 4 ou 5, et bloqué en position après assemblage, éventuellement par pincement, dans la zone de jonction desdites deux portions. Dans ce cas, la portion de passage 8 peut être réduite à un simple anneau portant les seules parties de siège 6, 6'.

Selon une autre variante de réalisation, l'insert ou l'élément intermédiaire est prolongé, du côté amont ou aval, par un embout de raccordement 12 pour une portion de conduit 4 ou 5, notamment pour un assemblage par emmanchement ou emboîtement avec une telle portion.

On notera que les différentes variantes de réalisation de l'invention décrites ci-dessus, sont aisément réalisables par moulage par injection de matières thermoplastiques, peuvent être montées de différentes manières (soudage, vissage, blocage par intégration et pincement, collage) en fonction de sa nature (insert, élément ou pièce de liaison intermédiaire, élément ou pièce rapportée) et de son matériau constitutif, ne nécessitent qu'un effort limité pour l'actionnement du clapet (axe central), permettent de passer de la position ouverte à la position fermée avec une rotation limitée à 45°, n'entraînent qu'une perturbation limitée du flux en position ouverte (bords biseautés = forme aérodynamique) et autorisent l'emploi d'un ressort de rappel de sécurité en position fermée, les parties de siège 6 et 6' formant butées en rotation.

L'invention a également pour objet un ensemble de régulation de l'écoulement d'un fluide entre une pluralité de portions de conduit amont et aval communiquant entre eux deux à deux, caractérisé en ce qu'il comporte pour chaque paire de portions de conduit amont 4 et aval 5, un dispositif à vanne à clapet pivotant 1 tel que décrit ci-dessus, les corps de clapet 2 de ces différents dispositifs 1 étant tous montés sur un même axe support et de commande 3.

En fonction des régulations à effectuer, et de leur interdépendance ou indépendance, il pourra être prévu que les corps de clapet 2 présentent des tailles, des formes et/ou des inclinaisons sur l'axe support et de commande 3 différentes.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble de régulation de l'écoulement d'un fluide comportant une portion de conduit amont (4), une portion de conduit aval (5), et un corps de clapet (2) sensiblement en forme de disque monté sur un axe support et de commande, entre la portion de conduit amont et la portion de conduit aval, le corps de clapet (2) étant monté de manière centrée sur un axe (3), les deux portions de conduit (4 et 5) étant désaxées l'une par rapport à l'autre, dans lequel les surfaces internes (7, 7') des décrochements opposés résultant dudit décalage axial ou non-alignement des portions (4 et 5) constituent les surfaces d'appui (7, 7') de deux parties de siège complémentaires (6, 6') pour le corps de clapet (2), situées de part et d'autre de l'axe (3) portant ledit corps de clapet (2), **caractérisé en ce que** les deux parties de siège complémentaires (6 et 6') présentent des surfaces internes et d'appui (7, 7') inclinées par rapport à un plan perpendiculaire aux axes longitudinaux (L, L') des deux portions de conduit (4 et 5) pour constituer une portion de passage (8) d'épaisseur non nulle reliant lesdites deux portions de conduit (4 et 5) et dont la surface interne assure la continuité et réalise la liaison entre les surfaces internes des deux portions de conduit (4 et 5) précitées, au moins au niveau des surfaces d'appui (7 et 7') des deux parties de siège complémentaires (6 et 6'), le corps de clapet (2) présentant des bords biseautés (9, 9') destinés à venir en appui avec coopération de forme et contact intime sur les surfaces internes (7 et 7') des parties de siège respectives (6 et 6') correspondantes.

2. Ensemble selon la revendication 1, **caractérisé en ce que** les surfaces d'appui (7 et 7') des deux parties de siège complémentaires (6 et 6') constituent, respectivement vues en direction amont pour l'une et en direction aval pour l'autre, au moins des parties de croissants de lune opposés, symétriques par rapport à l'axe (3) portant le corps de clapet (2) et dont les extrémités sont dirigées vers ledit axe (3).

3. Ensemble selon la revendication 2, **caractérisé en ce que** les bords biseautés (9 et 9'), ont des pentes opposées de part et d'autre de l'axe support et de commande (3) avec des angles au sommet des biseaux qui diminuent en s'éloignant dudit axe (3), en partant avec des bords pratiquement perpendiculaires à proximité dudit axe (3).

4. Ensemble selon la revendication 4, **caractérisé en ce que** les bords biseautés (9 et 9'), et en particulier les surfaces des bords biseautés venant en appui sur les surfaces (7 et 7') des parties de siège (6 et 6'), sont revêtus d'une garniture ou d'une couche d'étanchéité.

5. Ensemble selon l'une quelconque des revendications 1 à 4, **caractérisé en ce qu'**il présente, au moins au niveau de la portion de passage (8), des projections (10') des paliers (10) de l'axe support et de commande (3), protubérantes dans ladite portion de passage (8), délimitant latéralement à ce niveau la section de passage par deux cordes parallèles perpendiculaires à l'axe (3) et réduisant de ce fait les surfaces d'appui (7, 7') des parties de siège complémentaires (6, 6'), des flasques d'étanchéité (10") en forme de demi-disques étant rapportés ou formés sur le corps du clapet (2) et venant en application intime contre les faces des bords internes desdites projections (10').

6. Ensemble selon l'une quelconque des revendications 1 à 5, **caractérisé en ce que** la portion de passage (8) est réalisée sous la forme d'un insert ou d'un élément intermédiaire dans lequel est prémonté l'axe support et de commande (3) avec le corps de clapet (2), ledit insert ou élément intermédiaire étant pourvu d'interfaces (11, 11') de branchement et de raccordement pour une liaison étanche avec les portions de conduit amont (4) et aval (5).

7. Ensemble selon la revendication 6, **caractérisé en ce que** l'insert ou l'élément intermédiaire est prolongé, du côté amont ou aval, par un embout de raccordement (12) pour une portion de conduit (4 ou 5), notamment pour un assemblage par emmanchement ou emboîtement avec une telle portion.

## Claims

1. Assembly for regulating the flow of a fluid having an upstream conduit portion (4), a downstream conduit portion (5), and a substantially disc-shaped flap body (2) mounted on a control and support axle between the upstream conduit portion and the downstream conduit portion, the flap body (2) being mounted in a manner centred on an axle (3), the two conduit portions (4 and 5) being axially offset relative to each other, in which the internal surfaces (7, 7') of the opposite offsets resulting from the said axial displacement or non-alignment of the portions (4 and 5) constitute the bearing surfaces (7, 7') of two complementary seat parts (6, 6') for the flap body (2), located on opposite sides of the axle (3) carrying the said flap body (2), **characterised in that** the two complementary seat parts (6 and 6') have internal and bearing surfaces (7, 7') inclined relative to a plane perpendicular to the longitudinal axes (L, L') of the two conduit portions (4 and 5) to constitute a passage portion (8) of non-zero thickness connecting the said conduit portions (4 and 5) and whose internal surface ensures the continuity and effects the connection between the internal surfaces of the two conduit portions (4 and 5) mentioned above, at least in the region of the bearing surfaces (7 and 7') of the two complementary seat parts (6 and 6'), the flap body (2) having bevelled edges (9, 9') intended to come to bear, shape-matingly and with intimate contact, on the internal surfaces (7 and 7') of the respective corresponding seat parts (6 and 6').

2. Assembly according to Claim 1, **characterised in that** the bearing surfaces (7 and 7') of the two complementary seat parts (6 and 6') constitute, respectively seen in the upstream direction for one and in the downstream direction for the other, at least parts of opposite crescents, symmetrical relative to the axle (3) carrying the flap body (2) and whose ends are directed towards the said axle (3).

3. Assembly according to Claim 2, **characterised in that** the bevelled edges (9 and 9') have opposite slopes on opposite sides of the support and control axle (3) with angles at the vertex of the bevels which decrease when moving away from the said axle (3), starting with practically perpendicular edges close to the said axle (3).

4. Assembly according to Claim 4, **characterised in that** the bevelled edges (9 and 9'), and in particular the surfaces of the bevelled edges coming to bear on the surfaces (7 and 7') of the seat parts (6 and 6'), are covered with a sealing lining or layer.

5. Assembly according to any one of Claims 1 to 4, **characterised in that** it has, at least in the region of the passage portion (8), projections (10') of the bearings (10) of the support and control axle (3), which protrude in the said passage portion (8), laterally delimiting in this region the passage cross-section by two parallel chords perpendicular to the axle (3) and thereby reducing the bearing surfaces (7, 7') of the complementary seat parts (6, 6'), sealing flanks (10") in the form of half-discs being mounted or formed on the flap body (2) and coming into intimate application against the faces of the internal edges of the said projections (10').

6. Assembly according to any one of Claims 1 to 5, **characterised in that** the passage portion (8) is embodied in the form of an insert or an intermediate element in which the support and control axle (3) with the flap body (2) is preassembled, the said insert or intermediate element being provided with connecting interfaces (11, 11') for a tight connection to the upstream conduit portion (4) and downstream conduit portion (5).

7. Assembly according to Claim 6, **characterised in that** the insert or intermediate element is extended, on the upstream or downstream side, by a connection piece (12) for a conduit portion (4 or 5), particularly for assembly with such a portion by fitting together.

## Patentansprüche

1. System zur Regulierung bzw. Steuerung des Fließens eines flüssigen oder gasförmigen Mediums, das umfasst einen stromaufwärts gelegenen Rohrleitungsabschnitt (4), einen stromabwärts gelegenen Rohrleitungsabschnitt (5) und einen Ventilklappenkörper (2), der im Wesentlichen die Form einer Scheibe hat, die auf einer Träger- und Steuerachse montiert ist, wobei der Ventilklappenkörper (2) zwischen dem stromaufwärts gelegenen Rohrleitungsabschnitt und dem stromabwärts gelegenen Rohrleitungsabschnitt zentriert auf einer Achse (3) so montiert ist, dass die beiden Rohrleitungsabschnitte (4 und 5) axial gegeneinander versetzt angeordnet sind, in dem die inneren Oberflächen (7, 7') der einander gegenüberliegenden Absätze (Schrägen), die aus der axialen Versetzung oder Nicht-Ausrichtung der Abschnitte (4 und 5) resultieren, die Auflageoberflächen (7, 7') von zwei komplementären Sitz-Teilen (6, 6') für den Ventilklappenkörper (2) darstellen, die beiderseits der den Ventilklappenkörper (2) tragenden Achse (3) angeordnet sind, **dadurch gekennzeichnet, dass** die beiden komplementären Sitz-Teile (6 und 6') innere und Auflageoberflächen (7, 7') darstellen, die gegenüber einer Ebene senkrecht zu den Längsachsen (L, L') der beiden Rohrleitungsabschnitte (4 und 5) schräg (geneigt) angeordnet sind, sodass ein Durchgangsabschnitt (8) mit einer von Null verschiedenen Dicke entsteht, der die beiden Rohrleitungsabschnitte (4 und 5) miteinander verbindet und dessen innere Oberfläche die Kontinuität und Herstellung der Verbindung zwischen den inneren Oberflächen der beiden oben genannten Rohrleitungsabschnitte (4 und 5) mindestens im Bereich der Auflageoberflächen (7 und 7') der beiden komplementären Sitz-Teile (6 und 6') gewährleisten, wobei der Ventilklappenkörper (2) abgeschrägte Ränder (9, 9') aufweist, die in Cooperation mit der Form und in innigem Kontakt damit auf den inneren Oberflächen (7 und 7') der jeweiligen entsprechenden Sitz-Teile (6 und 6') zur Auflage kommen.

2. System nach Anspruch 1, **dadurch gekennzeichnet, dass** die Auflageoberflächen (7 und 7') der beiden komplementären Sitz-Teile (6 und 6'), jeweils betrachtet in der Stromaufwärts-Richtung für den einen Teil und in der Stromabwärts-Richtung für den andern Teil, mindestens einander gegenüberliegende Teile von Mondsicheln darstellen, die in Bezug auf die Achse (3), die den Ventilklappenkörper (2) trägt, symmetrisch angeordnet sind und deren Enden auf die genannte Achse (3) ausgerichtet sind.

3. System nach Anspruch 2, **dadurch gekennzeichnet, dass** die abgeschrägten Ränder (9 und 9') zueinander entgegengesetzte Neigungen beiderseits der Träger- und Steuer-Achse (3) aufweisen mit Winkeln an der Spitze der schrägen Ränder, die mit zunehmender Entfernung von der Achse (3) abnehmen, wobei man von Rändern ausgeht, die in der Nähe der Achse (3) praktisch senkrecht verlaufen.

4. System nach Anspruch 3, **dadurch gekennzeichnet, dass** die abgeschrägten Ränder (9 und 9') und insbesondere die Oberflächen der abgeschrägten Ränder, die auf den Oberflächen (7 und 7') der Sitz-Teile (6 und 6') zur Auflage kommen, mit einer Dichtung oder einer Abdichtungsschicht bedeckt sind.

5. System nach einem der Ansprüche 1 bis 4, **dadurch gekennzeichnet, dass** es mindestens im Bereich des Durchgangsabschnitts (8) Überstände (Vorsprünge) (10') der Lager (10) der Träger- und Steuerachse (3) aufweist, die in den genannten Durchgangsabschnitt (8) hineinragen, wodurch in diesem Bereich der Durchgangsquerschnitt durch zwei senkrecht zur Achse (3) verlaufende parallele Rippen seitlich begrenzt wird und die Auflageoberflächen (7, 7') der komplementären Sitz-Teile (6, 6') **dadurch** vermindert werden, wobei Abdichtungsflansche (10") in Form von Halbscheiben auf den Ventilklappenkörper (2) aufgesetzt oder daran angeformt sind und auf den Flächen der inneren Ränder der Vorsprünge (10') innig zur Auflage kommen.

6. System nach einem der Ansprüche 1 bis 5, **dadurch gekennzeichnet, dass** der Durchgangsabschnitt (8) als Einsatz oder Zwischenelement ausgeführt ist, in dem die Träger- und Steuerachse (3) mit dem Ventilklappenkörper (2) vormontiert ist, wobei der Einsatz oder das Zwischenelement mit Verzweigungs- und Anschluss-Grenzflächen (11, 11') für eine dichte Verbindung mit den stromaufwärts und stromabwärts gelegenen Rohrleitungsabschnitten (4, 5) ausgestattet ist.

7. System nach Anspruch 6, **dadurch gekennzeichnet, dass** der Einsatz oder das Zwischenelement auf der stromaufwärts oder stromabwärts gelegenen Seite um einen Anschlussansatz (12) verlängert ist für einen Rohrleitungsabschnitt (4 oder 5), insbesondere für den Zusammenbau durch Zusammenstecken oder Einschieben eines solchen Abschnitts.
